# EUROPEAN PATENT SPECIFICATION

(11) **EP 1 733 229 B1**
(45) Date of publication and mention of the grant of the patent: **13.01.2010**
(21) Application number: 05722254.9
(22) Date of filing: 22.03.2005
(51) Int. Cl.: G01N 33/53, C12Q 1/68, G03F 7/00

(54) **PATTERNING METHOD FOR BIOSENSOR APPLICATIONS AND DEVICES COMPRISING SUCH PATTERNS**
MUSTERAUFTRAGUNGSVERFAHREN FÜR BIOSENSORANWENDUNGEN UND SOLCHE MUSTER UMFASSENDE VORRICHTUNGEN
METHODE DE STRUCTURATION DESTINEE A DES APPLICATIONS UTILISANT DES BIOCAPTEURS ET DISPOSITIFS COMPRENANT CES STRUCTURES

(30) Priority: 24.03.2004 SE 0400783
(43) Date of publication of application: 20.12.2006
(73) Proprietor: Biochromix AB, 171 65 Solna (SE)
(72) Inventor: ASBERG, Peter, S-582 46 Linköping (SE); NILSSON, Peter, S-582 36 Linköping (SE); INGANÄS, Olle, S-582 46 Linköping (SE)
(74) Representative: Lindgren, Anders
(86) International application number: PCT/SE2005/000413
(87) International publication number: WO 2005/090975

(56) References cited:
- WO-A1-03/096016
- WO-A2-2004/006291
- TAN J. ET AL.: 'Microcontact printing of proteins on mixed selfs-assembled' LANGMUIR. vol. 18, 2002, pages 519 - 523, XP002989031
- IGANOS O. ET AL.: 'Chip and solution detection of DNA hybridization using a' NATURE MATERIALS. vol. 2, no. 6, June 2003, pages 419 - 426, XP002989032
- LOPEZ ET AL: "Fabricaiton and imaging of two-dimensional patterns of proteins adsorbed on self-assembled monolayers by scannning electron microscopy" J.AM.CHEM.SOC., vol. 115, 1993, pages 10774-10781, XP002349401
- KANE ET AL: BIOMATERIALS, vol. 20, 1999, pages 2363-2376,

## Description

### Field of the invention

The present invention relates to a method for patterning a biosensing layer, and to devices, such as biosensors or biochips, which can be made using the method. The devices made according to the invention are particularly suited for methods for detection of biomolecular interactions in materials based on photoluminescent conjugated polyelectrolytes.

### Background of the invention

The development of biosensor or biochip devices capable of selectively detecting biomolecular interactions using conjugated polymers (CPs) has attracted a lot of attention in recent years. CPs such as poly(thiophene) or poly(pyrrole) can be utilized to detect many kinds of analyte/receptor interactions, thus enabeling the manufacture of a variety of different biosensor devices. One condition for being able to use CPs for the detection of molecules in biological samples is that the CPs are compatible with an aqueous environment. Conjugated polyelectrolytes offer possibilities for very sensitive measurements, and may become ubiquitous for genomics and proteomics in the future, if the optical or electronic processes in these materials can be used to track biospecific interactions. One such CP that has demonstrated many useful interactions together with biomolecules is disclosed in International Patent Publication WO 03/096016. It is of special interest to use these CPs by attaching them on a solid support for the construction of biosensors that can be miniaturized, in particular in the form of µ-arrays and similarly patterned devices.

Most of the work in making arrays up to date has concerned organic light emitting devices (OLED's) which make use of thin films of polymer arranged in pixels arranged to form a display, such as a flat panel display. Patterning of OLED devices has mainly been done using standard photolithography processing. This type of processing typically involves photolithographic and etching techniques which require expensive equipment and is time consuming, and in most cases cannot accommodate biological molecules or water soluble polymers.

Patterning of the substrate with standard photolithography is achieved by using a mask between the source of radiation and a photosensitive material, a photoresist. After this step, chemical etching of the photoresist is needed. This poses some problems with chemical compatibility of biomaterials or certain polymers.

One alternative to standard photolithographic methods is soft lithography. Soft lithography refers to a number of non-photolithographic techniques which have been demonstrated for fabricating high-quality micro- and nanostructures. They are called soft lithography because in all these methods an elastomeric stamp is used as the element that defines the pattern. Polydimethyl siloxane (PDMS) has been used in Whitesides laboratory [Xia YN, Whitesides GM; (1998) Soft lithography; Angwandte Chemie-Int. Ed., 37(5):551-575.].

PDMS has many useful properties that can be used in the formation of high-quality and high-definition patterns and structures. Soft lithography patterning techniques are based on physical contact with the surface to be patterned. Due to the elasticity of PDMS it conforms to the surface topography over a large area, even when non-planar. This makes it very versatile for the purpose of making a patterned stamp. A PDMS stamp is thus fabricated by curing a PDMS prepolymer against a master, defining a desired stamping pattern. The stamp thus produced is then used for soft lithography. A number of different methods for soft lithography exist: microcontact printing (µCP), replica molding (REM), microtransfer molding (µTM), micromolding in capillaries (MIMIC), and solvent-assisted micromolding (SAMIM).

Recently a new method for patterning of OLED devices was developed, and disclosed in WO 04/006291. In this publication an elastomeric rubber stamp (PDMS) is used to modify the surface of a conducting polymer, poly(3,4-ethylenedioxythiophene) / poly(styrenesulfonate) (PEDOT/PSS), or an insulating polymer, sodium-polystyrene sulfonate (Na-PSS). Then a luminescent polymer in solution was deposited on top of this pattern and dried. The film was to be used in optoelectronic devices. Methods, which use standard photolithography and aggressive chemicals or polymers unreactive towards biosensing, such as PEDOT/PSS, are not attractive ways to produce biosensors. However, methods that use bioreactive polymers and that can accommodate biomolecules in water solutions would be attractive.

An alternative method to create hydrophobic/hydrophilic patterns is to combine soft lithography with the self-assembled monolayers formed by alkylthiols on a gold substrate [Wilhelm, T. & Wittstock, G. Generation of periodic enzyme patterns by soft lithography and activity imaging by scanning electrochemical microscopy. Langmuir 18, 9485-9493 (2002).]. This gives a hydrophilic monolayer pattern with a hydrophobic background, or vice versa, and directs solutions containing the molecules of interest to different parts of the surface to selectively adhere to these regions depending on the nature of the molecule or molecule complexes. The method requires gold as substrate which is, in most cases, unwanted in the final biosensor device since most detection principles are based on photoluminescence, which is strongly quenched at metal surfaces. The chemical step involved in the transfer of the self-assembled monolayer is also unwanted since it makes the construction of the biosensor more difficult.

Soft lithography techniques provide a simple and cost-effective way to create micro- or nanometer scale structures or patterns on various surfaces. Microcontact printing (µCP) is one of the most common soft lithographic techniques and poly(dimethylsiloxane) (PDMS) is the stamping material used in the majority of µCP studies conducted up to this date. Lately other stamping materials have been considered, such as polyolefin plastomers (POPs) [Csucs, G., Kunzler, T., Feldman, K., Robin, F. & Spencer, N.D. Microcontact printing of macromolecules with submicrometer resolution by means of polyolefin stamps. Langmuir 19, 6104-6109 (2003).]. In a recent study, antibodies were printed using PDMS stamps and their ability to bind the antigen was investigated [Graber, D.J., Zieziulewicz, T.J., Lawrence, D.A., Shain, W. & Turner, J.N. Antigen binding specificity of antibodies patterned by microcontact printing. Langmuir 19, 5431-5434 (2003).]. It was demonstrated that the printed antibodies retained much of their immunological activity. When constructing patterns for use in biosensors or biochip devices it is of great importance that the biological activity is retained.

### Summary of the invention

Thus, there remains a need for simple and accurate methods for making biosensor and biochip devices. The object of the present invention is therefore to provide means and methods that meet these and other requirements. This object, in a first aspect of the invention, is achieved by a patterned substrate, suitable for biosensing applications. The pattern comprises hydrophilic and hydrophobic areas, and wherein selected ones of said areas comprise at least one reporter molecule, a property of which is detectable.

The patterned substrate can be used as a biosensor device, which forms one further aspect of the invention, is defined in claim 12.

A biosensor apparatus is also provided by the invention and is defined in claim 19.

In a still further aspect the invention provides a method of making a patterned substrate, said method being defined in claim 1, comprising the following steps: providing a substrate of a suitable material; performing a stamping procedure to provide a pattern of hydrophilic and hydrophobic areas on said substrate, wherein one step of the stamping procedure comprises attaching at least one reporter molecule to at least selected ones of said areas, the fluorescence of said conjugated polyelectrolyte being detectable and which will change as a result of interaction with a biomolecule.

The present invention is based on the modification of a substrate or surface using soft lithographic methods, microcontact printing (µCP) in particular. Surface or substrate modification using µCP on selected areas is a process that minimizes the waste material since only the modified area needs to be covered with the bioreactive material, such as receptor and reporter molecules. This is useful when the sample amount is sparse or expensive. It is also possible to print over large areas.

These modified substrates or surfaces are then used to create biosensors or biochips. In particular, the device can be provided with a photoluminescent polyelectrolyte which can enable many different interactions with molecules and which allows detection of molecular interactions, without any labeling of the analytes or any covalent attachment of the receptors. A suitable polyelectrolyte for use in the present invention is disclosed in WO 03/096016.

In one embodiment, the use of different solvents such as water, methanol, water/methanol blends or by using different biomolecules in complex with the conjugated polyelectrolyte, can make the polyelectrolyte stick to different areas on the substrate surface depending on whether it has been in contact with the stamp material or not.

In still another aspect of the invention there is provided a method of determining selected properties of biomolecules according to claim 20 by exposing the surface of a biosensor, made as described above, to a target biomolecule analyte whereby the analyte and the sensor surface interact, a change of a property of said biosensor in response to the interaction between the receptor and the analyte is detected using a reporter molecule; and using the detected change to detect a property of said biomolecule analyte. The change of said property is detected by measuring fluorescence, Forester resonance energy transfer (FRET), quenching of emitted light, absorption, impedance, refraction index, mass, visco-elastic properties, thickness or other physical properties.

The present invention provides a means to retain the biological activity of the biomolecule, since the biomolecules are not transferred from the stamp but rather from their optimal solvent. Using this method to pattern biomolecules th e hydrophilicity and hydrophobicity of both the stamp and the substrate does not need to be considered. Otherwise, to successfully print proteins onto various substrates, such as disclosed in Tan, J.L., Tien, J. & Chen, C.S. Microcontact printing of proteins on mixed self-assembled monolayers. Langmuir 18, 519-523 (2002), there needs to be a minimum difference in contact angle between the stamp and substrate.

### Brief description of the drawings

In the images, narrow lines correspond to hydrophilic areas and wide lines correspond to hydrophobic areas.

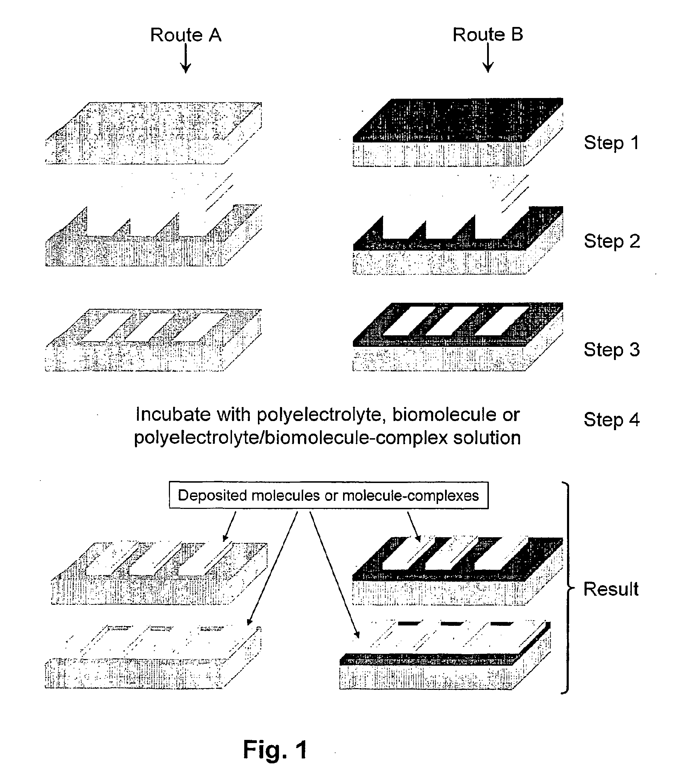

Figure 1 schematically shows the two main embodiments of the method according to the invention;

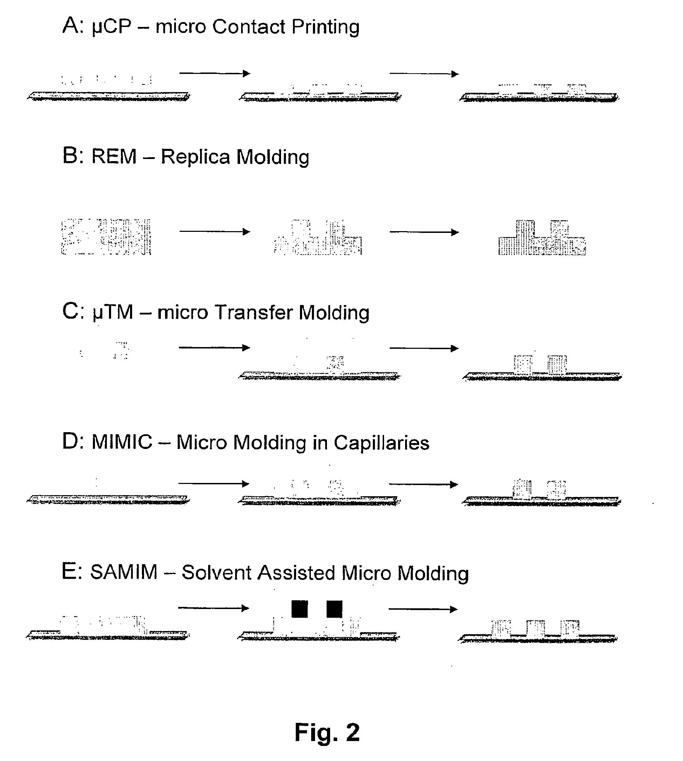

Figure 2 schematically illustrates a number of soft lithographic methods;

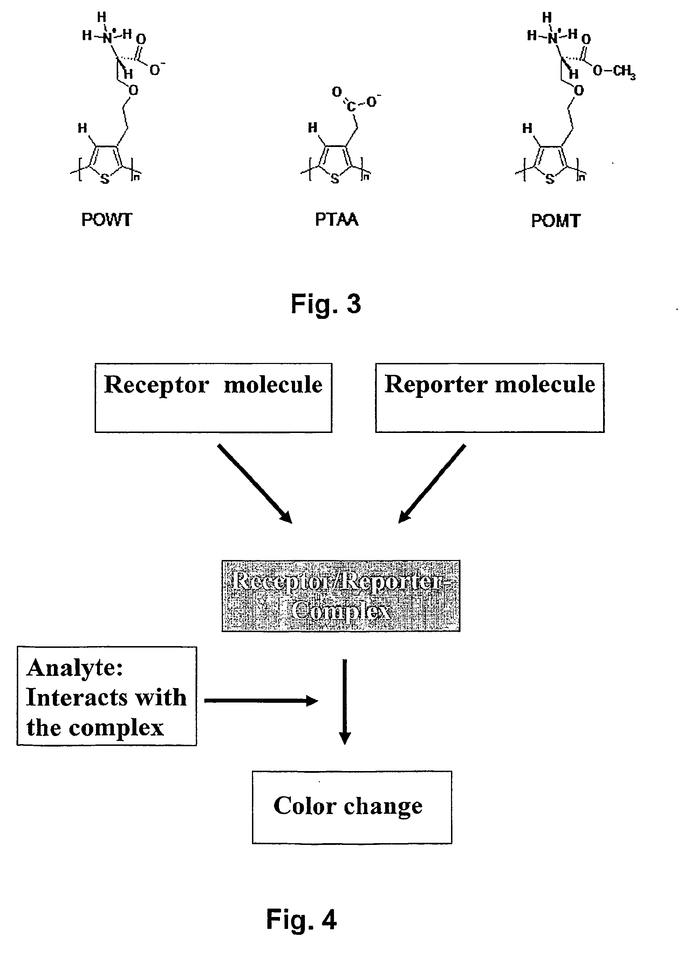

Figure 3 shows examples of fluorescent conjugated polyelectrolytes that can be used in the present invention. The figure shows the chemical structure of poly (3-[(S)-5-amino-5-carboxyl-3-oxapentyl]-2,5-thiophenylene hydrochloride) (POWT), a zwitterionic polythiophene derivative, polythiphene acetic acid (PTAA) an anionic polythiophene derivative and poly (3-[(S)-5-amino-5-methoxycarboxyl-3-oxapentyl]-2,5-thiophenylene hydrochloride) (POMT).
Figure 4 is a diagrammatic representation of the different steps involved in biorecognition, wherein receptor, reporter or receptor/reporter complex is patterned according to the present invention.

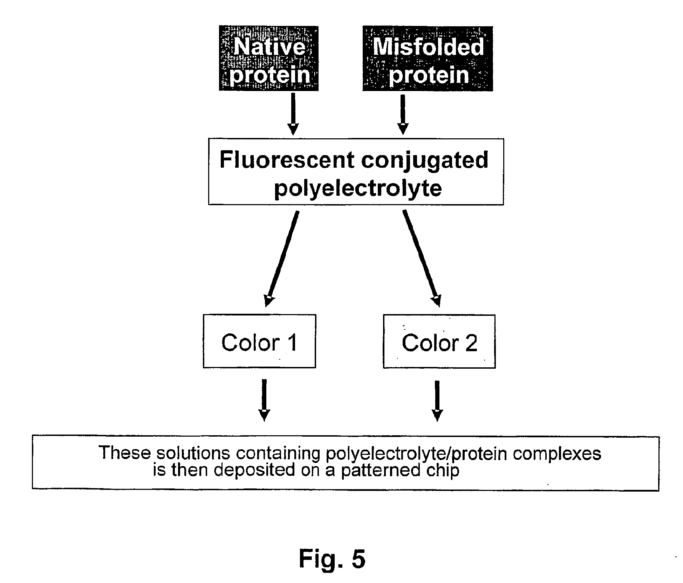

Figure 5 is a diagram showing the different steps involved in the example of protein conformations. Proteins with different conformations are complexed with a fluorescent conjugated polyelectrolyte and patterned according to the present invention.

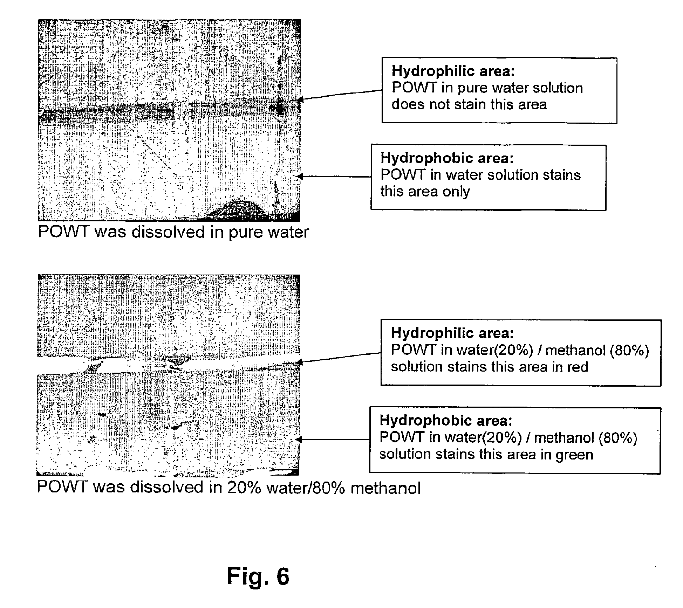

Figure 6 shows fluorescence images of patterned POWT (0,5 mg/ml) from water solution (left) and patterned POWT (0,5 mg/ml) in phosphate buffer solution (20 mM, pH 7) (right).

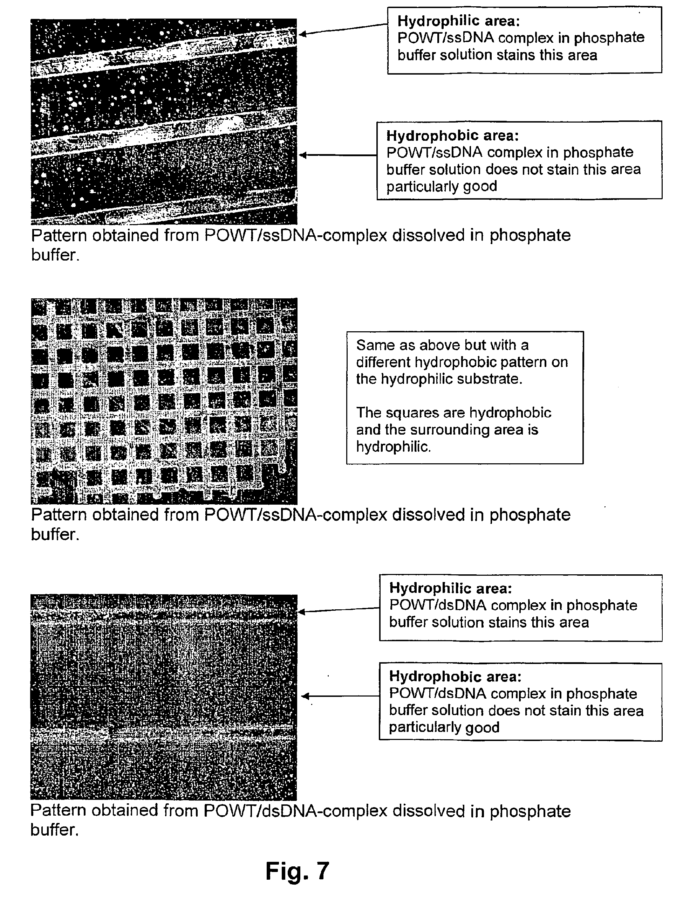

Figure 7 shows the fluorescence images of patterned POWT (0,2 mg/ml)/single stranded DNA(ssDNA) (2/ on monomer basis) in phosphate buffer (20 mM, pH 7) solution (top and middle). Patterned POWT (0,2 mg/ml)/double stranded DNA(dsDNA) (2/1 on monomer basis) in phosphate buffer (20 mM, pH 7) solution (bottom).
   In the images, narrow lines correspond to hydrophilic areas and the wide lines correspond to hydrophobic areas. In the other images the squares are hydrophilic areas and the surrounding areas hydrophobic.

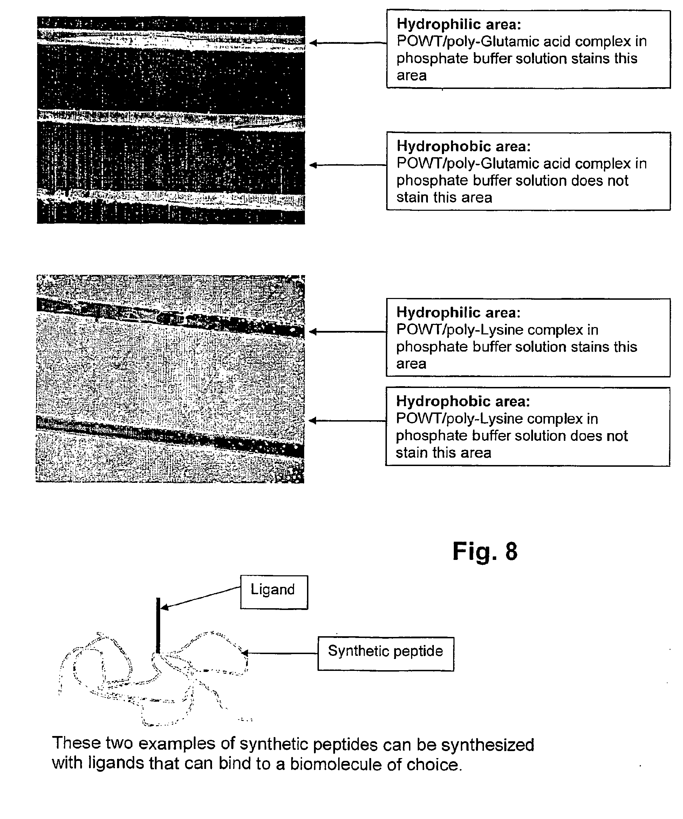

Figure 8 shows fluorescence images of patterned POWT (0,5 mg/ml)/polyglutamic acid (0,5 mg/ml) in phosphate buffer (20 mM, pH 7) solution (top) and patterned POWT (0,5 mg/ml)/poly-lysine (0,5 mg/ml) in phosphate buffer (20 mM, pH 7) solution (middle). In the images, thin lines correspond to hydrophilic areas and the wide lines correspond to hydrophobic areas. Bottom: An example how these synthetic peptides can be used for drug screening.

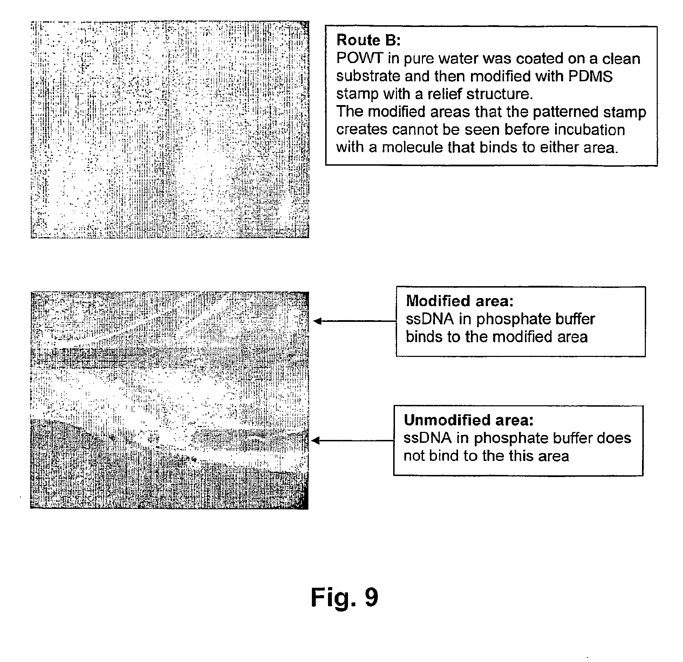

Figure 9 shows fluorescence images of POWT (0,5 mg/ml) from water solution (top) after a PDMS stamp had been placed on the uniform layer to modify the said layer, no pattern is seen. After a drop containing single stranded DNA (5 nmol/ml) a pattern appears from the patterning step (bottom). In the images, narrow lines correspond to the unmodified areas and the wide lines are modified by the stamp.

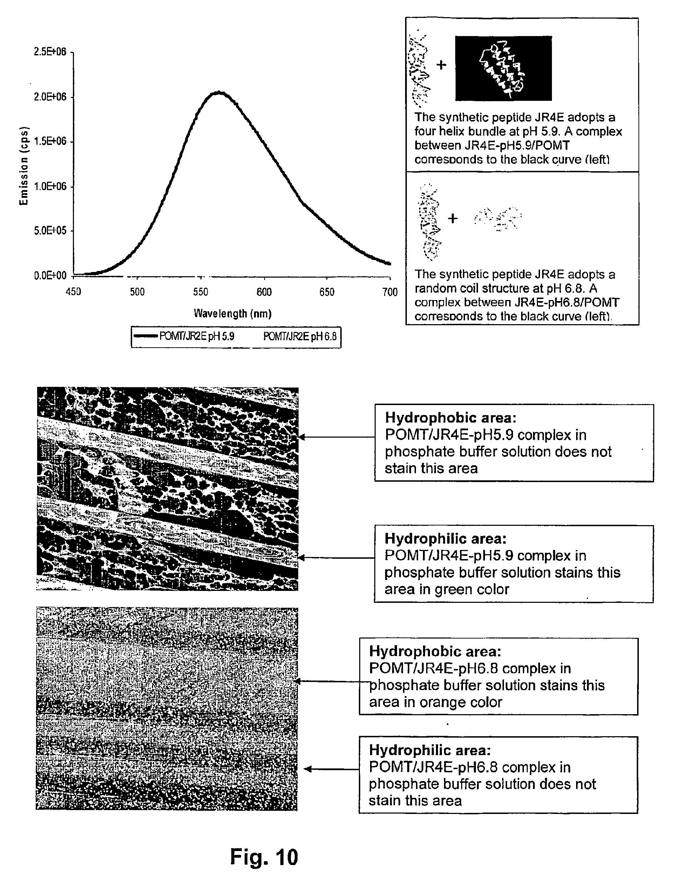

Figure 10 shows at the top: Fluorescence spectra from a POMT/JR4E-complex at different pH. JR4E is a synthetic peptide that adopts a four helix bundle at pH 5.9 and a random coil structure at pH 6.8. Middle and bottom: The fluorescence images of patterned POMT (0,5 mg/ml)/JR4E (0,7 mg/ml) in MES buffer (20 mM, pH 5.9) solution (middle) and patterned POMT (0,5 mg/ml)/JR4E (0,7 mg/ml) in phosphate buffer (20 mM, pH 6.8) solution (bottom). In the images, narrow lines correspond to hydrophilic areas and the wide lines correspond to hydrophobic areas.

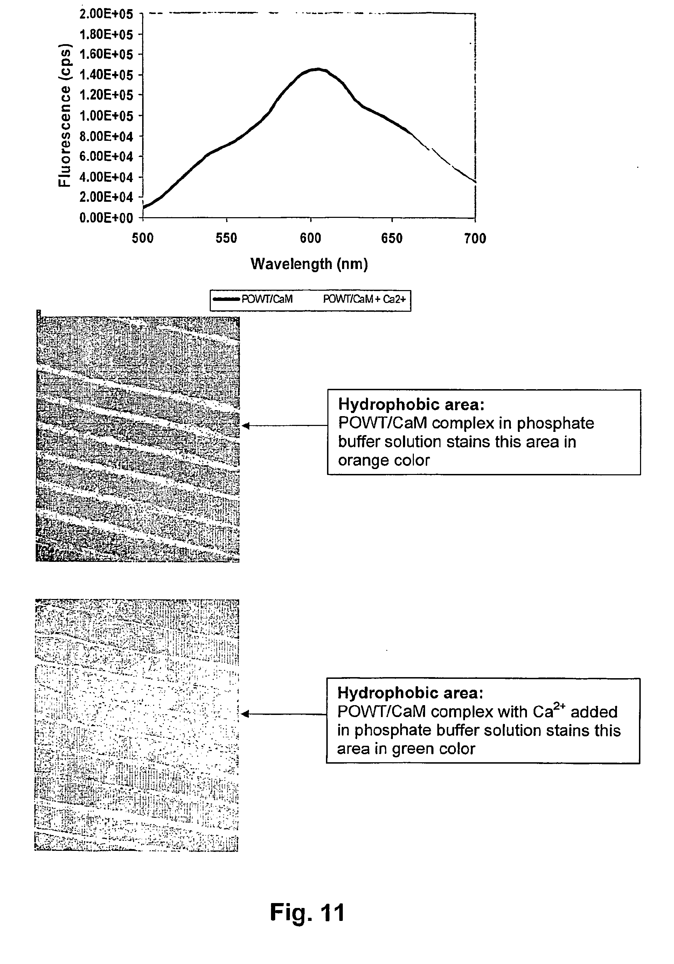

Figure 11 shows at the top: Fluorescence spectra from a POWT/Calmodulin (CaM)-complex with or without 10 mM Ca²⁺ added. CaM is natural protein that adopts different conformations with or without Ca²⁺. Middle and bottom: The fluorescence images of patterned POWT (0,5 mg/ml)/CaM (0,3 mg/ml) in Tris-HCl (20 mM, pH 7.5) buffer solution (middle) and patterned POWT (0.5 mg/ml)/CaM (0.3 mg/ml) in Tris-HCl (20 mM, pH 7.5) buffer solution with 10 mM Ca²⁺ (bottom). In the images, narrow lines correspond to hydrophilic areas and the wide lines correspond to hydrophobic areas.

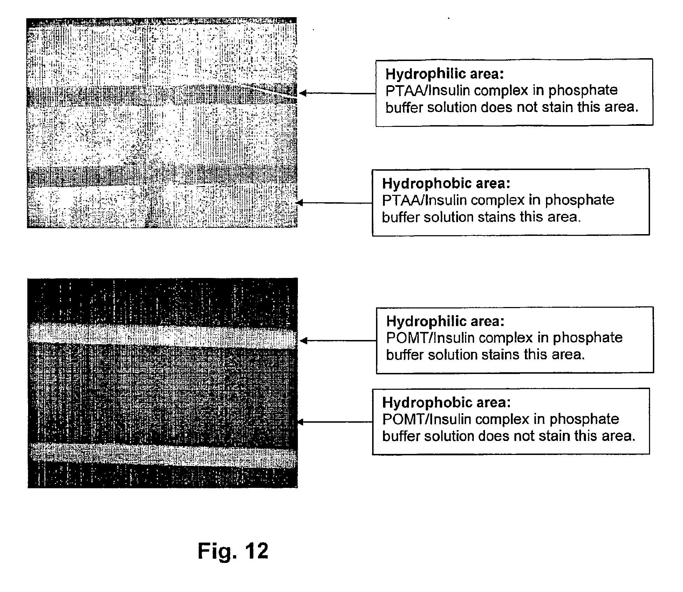

Figure 12 shows the fluorescence images of patterned PTAA (10 µM) /Insulin (11 µM) complex in phosphate (20 mM, pH 7.0) buffer solution (top) and patterned POMT (10 µM)/Insulin (11 µM) complex in phosphate (20 mM. pH 7.0) buffer solution (bottom). In the images, narrow lines correspond to hydrophilic areas and the wide lines correspond to hydrophobic areas.

### Detailed description of the invention

For the purpose of this application, the term "reporter molecule" shall be taken to mean any molecule or other chemical entity that can be adhered to a substrate surface, and has the capability of responding with some detectable change in property (e.g. fluorescence) when it interacts with another chemical entity.

The change in property can be detected by measuring fluorescence. Förster resonance energy transfer (FRET), quenching of emitted light, absorption, impedance, refraction index, mass, visco-elastic properties, thickness or other physical properties.

"Incubation" as the term is used herein, shall be taken to mean the maintenance of a sample in a defined environment of controlled temperature, humidity, and oxygen concentration for a certain amount of time. An example is at ambient conditions in room temperature for 30 min.

"Curing" as the term is used herein, shall be taken to mean the process during incubation when a material becomes hard or solidified by cooling, heating, drying, crystallization, light exposure or by any other act. An example is in a convection oven at 80°C for 45 min.

"Target" as the term is used herein, shall be taken to mean an object fixed as goal or point of examination. Examples of this is an antigen that can bind to an antibody or vice versa, a DNA strand that can bind to another, a protein altering its conformation, a protein forming fibrils, a ligand that can bind to a protein, a synthetic peptide and more.

"Receptor" as the term is used herein, shall be taken to mean a chemical group or molecule (such as a protein, DNA strand, synthetic peptide, peptide) on a surface or in free in solution that has an affinity for a specific chemical group, molecule, protein, DNA, RNA, peptide, cell or virus.

"Pattern" means a substrate containing different areas of different characteristics or a PDMS stamp containing a relief structure.

In general terms, the present invention relates to a novel patterning method for biosensors, biochips or any other devices aimed for the detection of biomolecular interactions. For the construction of a device according to the invention, a few simple steps are used and the molecules provided for the construction can be in the preferred solution.

The invention is based on surface modification in the sense of changing the surface free energy of a substrate. In particular the surface is made to exhibit areas of different hydrophobic/hydrophilic properties. This modification is achieved without involving any chemical steps and can thus be achieved on a great variety of different substrates. A surface that has been patterned so as to exhibit areas of different surface free energy can then be used to bind various molecules and molecular complexes for biomolecular recognition and detection. According to a preferred embodiment of the invention, conjugated polyelectrolytes are used, either alone or in combination with other compounds, e.g. suitable receptors for the target molecule in question, to bind said target molecules.

When performing detection methods using devices made according to the invention, involving interactions between target molecules and a receptor or reporter molecule, the binding of target molecules does not require covalent bonding and can be based on hydrogen bonding, electrostatic and non-polar interactions between the conjugated polyelectrolytes and the receptor molecules, herein referred to as non-covalent bonding, which further includes any type of bonding that is not covalent in its nature.

In one aspect of the present invention, a method for patterning a substrate, usable in biosensors, biochips or any other devices aimed for the detection of biomolecular interactions using a patterned stamp is provided.

Generally, the method according to the invention of making a patterned substrate for biosensing applications, comprises providing a substrate of a suitable material; performing a stamping procedure to provide a pattern of areas on said substrate where the surface energy has been modified (e.g. to exhibit hydrophilic and hydrophobic areas), wherein one step of the stamping procedure comprises attaching at least one reporter molecule, suitably a fluorescent conjugated polyelectrolyte, a reporter-receptor or a reporter-biomolecule complex, to at least selected ones of said areas, the fluorescence of said conjugated polyelectrolyte being detectable and which will change as a result of interaction with a biomolecule.

The stamping procedure comprises a couple of steps that can vary, in particular the actual pattern stamping can be performed either before or after the polyelectrolyte has been deposited onto the substrate.

In a preferred embodiment, the method according to the invention comprises the following steps (referred to as Route A):

### Route A:

Step 1, A clean substrate is provided.
Step 2, A patterned or non-patterned PDMS stamp is brought into conformal contact with the substrate for a certain amount of time.
Step 3, The solution containing the conjugated photoluminescent polyelectrolyte, biomolecule or complex between the polyelectrolyte and molecule is placed on the pattern.
Step 4, After incubating a certain time the solution is removed from the surface by blowing with nitrogen gas. In some aspects the solution is left on the surface until it has dried completely.
The result will depending on the wettability of the solution and the solute molecules be a negative or positive pattern of adsorbed molecules appears on the hydrophobic/hydrophilic pattern.

In an other, alternative embodiment, the method according to the invention comprises the following steps (referred to as Route B):
Step 1, Preparation of a film containing the conjugated photoluminescent polyelectrolyte, biomolecule or complex between the polyelectrolyte and molecule from solution on a clean substrate.
Step 2, A patterned or non-patterned PDMS stamp is placed on the film on the substrate for a certain amount of time.
Step 3, Removal of the PDMS stamp results in hydrophobic areas at the contact points between the stamp and the film covered substrate.
Step 4, A solution containing the conjugated photoluminescent polyelectrolyte, biomolecule or complex between the polyelectrolyte and molecule is brought into contact conformal with the pattern. After incubating a certain time the solution is removed from the surface by blowing with nitrogen gas. In some aspects the solution is left on the surface until it has dried completely.
The result depending on the wettability of the solution and the solute molecules will be a negative or positive pattern of adsorbed molecules appears on the patterned film.

These patterned surfaces, either from route A or B, can then be further patterned according to the present invention, patterned by other methods or used as they are depending on the use of the device.

In addition to PDMS mentioned above, polyolefin plastomers (POP) or other plastomers can also be used as stamping material according to the present invention.

The method according to the invention provides a convenient way to create patterns on substrates which can be used to build microstructures for application in biosensors, biochips or any other devices aimed for the detection of biomolecular interactions. For attaching the necessary reporter molecules, e.g. polyelectrolytes, receptor molecules, or reporter/receptor complexes methods such as spin coating or dip coating are suitable. Such microstructures may be arranged in pixels in micro size, narrow lines or in larger area structures depending on the need.

No bulk material, other than a very small amount of PDMS molecules from the stamp itself, is transferred from or to the surface of the patterned stamp in step (2) and (3) of the method according to the present invention. The method disclosed in the present application does not require any other material, such as PEDOT/PSS or Na-PSS, on the surface of the substrate and no imprinting or lift-off is done. When constructing biosensors it is an advantage if as little interfering materials is transferred as possible. Consequently the patterned stamp, in the present method, will define a hydrophobic pattern on a hydrophilic surface. The biosensing layer, constituting reporter and biomolecules, is then patterned from solution on top of said hydrophobic pattern on the hydrophilic surface and will not be contaminated with PDMS molecules as with other soft lithographic methods such as µCP. Another aspect is that the stamp will not be contaminated during use and can thus be reused. Thus the surface of the substrate to which the molecules will be transferred in later steps is not contaminated during the patterning. A further advantage is that the patterned stamp can be used again without cleaning it first.

The patterned stamp, without any addition of material on the stamp, is contacted with the substrate in the method according to the present invention. This is in contrast with most other known soft lithographic methods, where the stamp is first covered/exposed to the material to be placed onto the substrate. In most cases the device material is always transferred from the stamp to the substrate during contact. However, in the present invention no layer of foreign material is on the stamp during contact to the substrate and thus no bulk transfer of foreign material to the substrate occurs. This removes the problem of first having to deposit biomolecules or active biosensing materials on the stamp, and then to transfer them onto a substrate.

According to the present invention these materials, in the optimal solution conditions, are transferred to the substrate after it has been modified by the stamping operation.

In particular the present invention in one aspect introduces a new approach to realize devices aimed for, but is not limited to, detection of biospecific recognition through DNA (base pairing), proteins (antigen/antibody), glycoproteins or shorter peptides designed for a specific purpose. For this purpose a patterned surface of receptors and reporter molecules, such as conjugated polyelectrolytes, that can report back the interaction that has occurred between the analytes and receptors is deposited/provided A complex between the reporter molecule and receptors is suitably implemented in the biosensor device by using the immobilization method described. The reporter and receptor molecule can be adsorbed together or sequentially to the surface using many different methods, but not limited to, casting, dip coating, spin-coating, contact printing, screen printing, ink jet technologies, spraying, dispensing and microfluidic printing by the use of soft lithography or the BiaCore™ (Biacore AB, Uppsala, Sweden) system.

The key of the present method is the transfer of biomolecules or active biosensing materials, dissolved in an optimal solution that best preserves the activity of the molecules, to the surface of a substrate. Modification of the surface energy of areas on substrate is the key to deposit these materials on selected places or to modify an already deposited material to exclude deposition of other molecules on these areas. Thus, the surface energy on a substrate, the active biosensing material on a substrate or the biomolecules on a substrate, is modified by the action of the stamp during contact with the surface or molecule coated surface. Since the material that is to be deposited is directed to the appropriate surface area by differences in surface free energy between different areas, no banks or posts are needed to direct the material to the desired areas of the substrate. This greatly simplifies the construction of biosensors, biochips or any other devices aimed for the detection of biomolecular interactions.

The present invention relates to a variety of devices aimed for the detection of biomolecular recognition, such as the matching between DNA, antigen and antibodies, receptors and ligands or any other biomolecular interaction where a recognition event occurs. Receptor together with reporter molecules are used to create patterns or surfaces aimed for construction of devices such as biosensors or biochips for detection of biomolecular interactions.

For example there is provided a biosensor apparatus, comprising a patterned substrate, wherein the pattern comprises hydrophilic and hydrophobic areas, and wherein selected ones of said areas comprise at least one reporter molecule, a property of which is detectable, the substrate being located in a receptacle, suitably a flow cell, the device further comprising means for detecting said detectable property.

The detailed description of the invention that follows deals separately with soft lithography, fabrication of stamp templates, stamps and preparation of substrates to be patterned, the reporter molecules, receptor molecules, analytes, immobilization on surfaces and arrays and lines. The invention is finally exemplified with a number of experiments demonstrating the utility thereof.

### I. Soft lithography

Soft lithography refers to a number of non-photolithographic techniques, developed by Whitesides *et al.* [Xia YN, Whitesides GM; (1998) Soft lithography; Angwandte Chemie-Int. Ed., 37(5):551-575.], that can be used for fabricating high-quality microstructures and even nanostructures. Patterning using soft lithography techniques relies on the physical contact between a soft elastomer stamp and a substrate and not the projection of light through a mask, as with standard photolithographic techniques. There are a number of methods for soft lithography: microcontact printing (µCP), replica molding (REM), microtransfer molding (µTM), micromolding in capillaries (MIMIC), and solvent-assisted micromolding (SAMIM).

By means of standard soft lithographic methods, such as µCP or imprinting, bulk material is transferred from or to the patterned stamp and it can be used to create indentations in a surface layer. The work of Whitesides group is disclosed in US patent No. 5 512 131, titled "Formation of microstamped patterns on surfaces and derivative articles" (Kumar & Whitesides). This prior art patent discloses a process wherein a molecule capable of forming a self-assembled monolayer is coated onto the surface of an elastomeric stamp, said molecule has a functional group selected to bind to a particular material. The surface of the elastomeric stamp is placed onto the surface of the material surface and then removed to leave a self-assembled monolayer of the species according to the pattern of the elastomeric stamp.

There are a number of documents disclosing prior art techniques for patterning surfaces or materials deposited thereon without using conventional photolithography.

These techniques are referred to as soft lithography techniques and are based on material transfer by a soft rubber stamp in direct contact with the surfaces and materials to be patterned. The prior art WO 00/70406 (Tobias) describes a method in which a substrate coated with a material are patterned by using an elastomeric PDMS stamp by lift-off when the stamp is removed. WO 01/04938 (Imprinting) is a prior art describing the patterning of a material by causing indentations in the said material using a stamp. The prior art document WO 04/006291 (Xiangjun) discloses a process wherein a substrate, coated with either PEDOT/PSS or Na-PSS, is patterned by an elastomeric PDMS stamp. Said stamp does not transfer any material; it rather modifies the surface of the PEDOT/PSS or Na-PSS and creates a hydrophofic/hydrophilic pattern. This pattern is later used to create displays or other optoelectronic devices.

These methods are depicted in Figure 2, and briefly described below.
A: The material is transferred from a patterned stamp to a substrate by a stamping procedure.
B: A patterned stamp is used to emboss the material.
C: The material is placed inside the crevices of the stamp and then transferred to the substrate.
D: A patterned stamp is placed on the substrate. The material is then drawn into the channels of the stamp by capillary action; later the stamp can be removed.
E: A patterned stamp is placed on the material to be patterned. Then a solvent for the material is flown into the channels of the stamp, later the stamp can be removed.

Contact printing is the soft lithographic technique that is particularly useful for surface modification of the biosensor surface in the present invention. µCP is a straightforward method for surface or substrate modification but also for pattern generation. In the present invention the PDMS stamp is placed in conformal contact with the substrate or surface. µCP has the advantage of simplicity, accuracy and that it is reusable: Once the stamp is available, multiple copies of the pattern can be produced.

### II. Fabrication of stamp templates, stamps and preparation of substrates to be patterned

Stamps suitable for performing the method according to the invention are made by a molding process using templates.

The templates for the stamps can be prepared by photolithography using, but not limited to, the negative photoresist SU-8 (Micro Chem Inc., Newton, MA, USA) as the structural element on top of silicon wafers. The height of structures, defining the pattern of the stamp to be made, is chosen with respect to the dimension of the desired pattern but usually is between 2-100 µm in height. Suitably the substrate can be a silicon wafer cleaned in a boiling aqueous solution containing 5% each of ammonia and H₂O₂ (TL-1 wash). The geometry for templates was designed using CleWin Version 2.51 (WieWeb Software), and transferred to a Cr mask, which was used in the photolithography step. After developing the SU-8 structures on the silicon wafer forming the template, silanization (by treating with dimethyl-dicholorosilane) was done to obtain the proper surface energy of the SU-8 template. Sylgard 184 (Dow Corning, UK), a two component silicone rubber (poly(dimethylsiloxane), PDMS), can suitably be used for preparing the elastomer stamps. The prepolymer and the curing agent for the two-component silicone rubber are mixed according to the instructions provided by the manufacturer. The mixture is then poured on templates prepared as described above and curing is accomplished by heating up to 130°C for at least 20 min, but lower temperatures and longer incubation times can also be used depending requirements of stamp softness. Stamps are cut out in appropriate sizes after curing. Other stamp materials can also be used in the patterning step.

The substrates to be patterned with the stamps made as described above can be, but are not limited to, silicon wafers, glass (e. g. glass slides, glass beads, glass wafers etc.), polystyrene, polyethylene, gold, indium tin oxide (ITO coated materials, e. g. glass or plastics) is first cleaned using the TL-1 procedure.

### III. Reporter molecules

The biosensor devices according to the present invention employs a variety of reporter molecules derived from conjugated polyelectrolytes, with a minimum of 5 mers, consisting of mers derived from the monomers thiophene, pyrrole, aniline, furan, phenylene, vinylene or their substituted forms, forming homopolymers and copolymers there from. Furthermore, monomers with anionic-, cationic or zwitterionic side chain functionalities are included within the scope of the invention. The side chain functionalities is derived from, but not limited to, amino acids, amino acid derivatives, neurotransmittors, monosaccharides, nucleic acids, or combinations and chemically modified derivatives thereof. The conjugated polyelectrolytes used in the present invention may contain a single side chain functionality or may comprise two or more different side chain functionalities. The functional groups of the conjugated polyelectrolytes, charged anionic or cationic at different pH levels make these polyelectrolyte derivatives suitable for forming strong polyelectrolyte complexes with negatively or positively charged oligomers and polymers. In addition, the ionic groups create versatile hydrogen bonding patterns with different molecules. One reporter molecule of particular interest is the zwitterionic conjugated polythiophene described in WO03/096016.

### IV. Receptor molecules

The molecule that constitutes the recognition element of the present invention acts as a receptor molecule, shown in Figure 3. Receptor molecules act as the recognition site for analytes through a lock and key mechanism or as anchors for performing enzymatic reactions, such as phosphorylation, the analyte in Figure 3. Many different kinds of receptor molecules can be used and the choice of molecule is only limited by the ability to form a complex with the reporter molecule, to adsorb to the surface of the substrate or detector molecule and the recognition properties of desirable analytes. Appropriate receptor molecules include, but are not limited to, peptides, carbohydrates, nucleic acids (DNA, RNA, mRNA, cDNA, etc), lipids, pharmaceuticals, antigens, antibodies, proteins, any organic polymers or combination of these molecules that are capable of interacting with analytes of interest. The receptor molecules can be chemically modified to interact with the surface of the substrate or any other molecule on the substrate.

### V. Analytes

Analyte molecules are such molecule that interacts with the receptor molecules in a specific way or molecules that alter its conformation in a certain way, which is the principle of the biosensor function. Appropriate analytes include, but are not limited to, cells, viruses, bacteria, spores, microorganisms, peptides, carbohydrates, nucleic acids (DNA, RNA, mRNA, cDNA, etc), lipids, pharmaceuticals, antigens, antibodies, proteins, enzymes, toxins, any organic polymers or combination of these molecules that interacts with receptors of interest. The analyte molecules can be chemically modified to interact with the surface of the substrate or any other molecule on the substrate.

### VI. Immobilization on substrate

The reporter molecules, the receptor molecules or combinations thereof can be immobilized on a variety of substrate, including, but not limited to silicon wafers, glass (e. g. glass slides, glass beads, glass wafers etc., silicon rubber, polystyrene, polyethylene, teflon, silica gel beads, gold, indium tin oxide (ITO coated materials, e. g. glass or plastics), filter paper (e. g. nylon, cellulose and nitrocellulose), standard copy paper or variants thereof and separation media or other chromatographic media.

When the receptor molecules are immobilized on the chosen solid support underneath, on top of or together with the reporter molecule of the present invention they form a complex with the polyelectrolyte through non- covalent interactions (Figure 1 and 3). This complex is formed without covalent chemistry and is based on hydrogen bonding, electrostatic-and non-polar interactions between the conjugated polyelectrolyte and the biomolecule. Immobilization of the receptor molecules (can be biomolecules) to the reporter molecules (can be photoluminescent conjugated polymers) of the present invention may be desired to improve their ease of use, assembly into devices (e. g. arrays or parallel lines), stability, robustness, fluorescent response, to fit into the process of high-throughput-screening (HTS) using microtiter plates and other desired properties.

The conjugated polyelectrolyte and the biomolecules can be entrapped inside polymer matrices on top of a solid support or free floating in solution. A gel or network of the conjugated polymers can be formed, where each conjugated polyelectrolyte chain of the present invention is in (indirect) contact with all chains in the network. Realization of these polymer matrices can be done by mixing the conjugated polyelectrolyte with other polymers such as, but not limited to, poly (3,4-ethylenedioxythiophene)/poly (styrenesulfonicacid) (PEDOT/PSS), poly (diallyldimethylammonium chloride) (PDADMAC), poly-4-vinylpyridine (PVPy), poly (pyrrole) (PPy), poly (vinylalcohol) (PVA), poly (aniline) (PANI) or combinations thereof. By swelling these polymer blends in water a hydrogel is realized, which can be of interest when using biomolecules of biological origin. The conjugated polyelectrolytes of the present invention can be mixed together with these polymers before immobilization to the solid support or transferred afterwards. Biomolecules of interest can be transferred together with the conjugated polyelectrolyte or in subsequent steps. A microarray or parallel line format can be used if desired, necessary or for other reasons.

### VII. Arrays or lines

According to the present invention generation of large arrays or parallel lines of many different, similar or equal biosensor spots can be achieved. Arrays or lines can be used to increase ease of use, massive parallelism or other required characteristics or qualities. By using this approach many different, similar or equal analytes can be analyzed simultaneously with respect to one or different receptors. A microarray, where many individual detector elements (or probes) are integrated on a small surface area, allows massive parallelism in the detection. Since we can construct each individual detector by simply adding the molecules from solution onto a patterned surface we have reduced the number of chemical steps to a minimum for making each one of many thousands of detectors in a detector array (microarray). By using a standard micro dispenser, ink-jet printer, microfluidic network, BiaCore or other techniques a multipixel array can be prepared.

### Experimental

To build efficient biosensors, biochips or any other devices aimed for the detection of biomolecular interactions, such as conformation changes or binding events, efficient means for easy patterning and surface immobilization of molecules involved in the device are needed. The present invention presents a solution to these needs by demonstrating how relevant reporter molecules, receptor biomolecules or complexes of reporters and receptors can be patterned. Molecules dissolved in different solvents or solvent blends are incubated on the patterned surface they adhere to different parts on the surface depending on the surface free energy. Furthermore, by the use of buffers at various pH molecules can adhere different areas of the patterned surface can be achieved. The receptor and target biomolecules need to be dissolved in optimal buffer solutions to be able to function properly, adhere to the patterned surface with preserved function and change their properties in a natural way. Solutions of receptor biomolecules or complexes between reporter molecules and receptor biomolecules can be applied onto the patterned substrate which creates a suitable patterned surface for biosensors or biochips. An important class of reporter molecules, although the invention is not limited thereto, is the zwitterionic conjugated polymers described in WO03/096016. This class of reporter molecules shows all the desired properties for constructing the biosensors, biochips or any other devices aimed for the detection of biomolecular interactions described in the present invention. An important aspect of the present invention is that the reporters, receptor molecules or complexes between these can be applied to a non-patterned surface and then patterned afterwards according to the methods described.

### Example 1: Immobilization of a zwitterionic conjugated polyelectrolyte (POWT) from water solution or water/methanol solution (Route A).

Stamps and substrates are provided according to VI in the detailed description of the present invention. The surface of the individual substrates is patterned, with respect to surface free energy, by placing separate stamps onto them and incubating for 30 min. Stock solutions containing 0.5 mg/ml POWT in de-ionized water or POWT in de-ionized water/methanol (20/80) was then prepared and incubated for 30 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 3000 ms). The result of this patterning procedure is shown in figure 6. With POWT dissolved in pure water, the hydrophilic area is not stained, whereas the hydrophobic area is stained. With POWT in water/methanol (20%/80%), hydrophilic area is stained in red, and the hydrophobic are is stained in green.

### Example 2: Immobilization of a zwitterionic conjugated polyelectrolyte /DNA complex from water solution (Route A).

Stamps and substrates are provided according to VI in the detailed description of the present invention. The surface of the individual substrates is patterned, with respect to surface free energy, by placing separate stamps onto them and incubating for 30 min. Stock solutions containing POWT (0,2 mg/ml)/single stranded DNA (2/1 on monomer basis) complex in phosphate buffer (20 mM, pH 7) and POWT (0,2 mg/ml)/double stranded DNA (2/1 on monomer basis) complex in phosphate buffer (20 mM, pH 7) was then prepared and incubated for 5 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 3000 ms). The result of this patterning procedure is shown in figure 7. With POWT/ ssDNA complex in phosphate buffer, the hydrophilic area is stained, whereas the hydrophobic area is not particulalry well stained. With POWT/dsDNA complex in phosphate buffer, the hydrophilic area is stained, whereas the hydrophobic area is not particulalry well stained.

### Example 3: Immobilization of a zwitterionic conjugated polyelectrolyte /peptide complex from a buffered water solution (Route A).

Stamps and substrates are provided according to VI in the detailed description of the present invention. The surface of the individual substrates is patterned, with respect to surface free energy, by placing separate stamps onto them and incubating for 30 min. Stock solutions containing POWT (0,5 mg/ml)/polyglutamic acid (0,5 mg/ml) in phosphate buffer (20 mM, pH 7) solution and POWT (0,5 mg/ml)/poly-lysine (0,5 mg/ml) in phosphate buffer (20 mM, pH 7) was then prepared and incubated for 5 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 3000 ms). The result of this patterning procedure is shown in figure 8. With POWT/poly-Glutamic acid complex in phosphate buffer, the hydrophilic area is stained, whereas the hydrophobic area is not particulalry well stained. With POWT/poly-Lysin acid in phosphate buffer, the hydrophilic area is stained, whereas the hydrophobic area is not particulalry well stained.

### Example 4: Modification of a POWT coated glass substrate and transfer of DNA to a zwitterionic conjugated polyelectrolyte (Route B).

Stamps and substrates are provided according to VI in the detailed description of the present invention. The surface of the individual substrates is patterned, with respect to surface free energy, by placing separate stamps onto them and incubating for 30 min. A stock solution containing POWT (0,5 mg/ml) in water solution was then prepared and incubated for 30 minutes. 50 µl of the solution was placed on a clean glass surface. After 20 minutes of incubation at ambient conditions the droplet were removed by blowing with nitrogen gas until the substrate is completely dry. Then a patterned PDMS stamp was placed on the uniform POWT layer and a picture was taken. After this step, a drop containing single stranded DNA (5 nmol/ml) was placed on the modified POWT and incubated for 20 min and then removed by blowing with nitrogen gas. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 3000 ms). The result of this patterning procedure is shown in figure 9. POWT in pure water was coated on a clean substrate and then modified with PDMS stamp with a relief structure. The modified areas that the patterned stamp creates cannot be seen before incubation with a molecule that binds to either area. ssDNA in phosphate buffer binds to the modified area. ssDNA in phosphate buffer does not bind to the unmodified area

### Example 5: Differentiation between different conformations in synthetic peptides (JR4E) using POMT and surface modified patterned glass substrates (Route A).

JR4E is a synthetic peptide that adopts a four helix bundle at pH 5.9 and a random coil structure at pH 6.8.
Stamps and substrates are provided according to VI in the detailed description of the present invention. The surface of the individual substrates is patterned, with respect to surface free energy, by placing separate stamps onto them and incubating for 30 min. Solutions of POMT (0,5 mg/ml)/JR4E (0,7 mg/ml) in MES buffer (20 mM, pH 5.9) and POMT (0,5 mg/ml)/JR4E (0,7 mg/ml) in phosphate buffer (20 mM, pH 6.8) was prepared and incubated for 30 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 1000 ms). Fluorescence spectra from a POMT/JR4E-complex at different pH were recorded using a Jobin-Yvon spex FluoroMax-2 apparatus, excitation was set to 400 nm and the emission spectra were recorded from 450 to 700 nm. The result of this procedure is shown in figure 10. POMT/JR4E-pH5.9 complex in phosphate buffer solution does not stain the hydrophobic area. POMT/JR4E-pH5.9 complex in phosphate buffer solution stains the hydrophilic area in green color. POMT/JR4E-pH6.8 complex in phosphate buffer solution stains the h hydrophobic area in orange color. POMT/JR4E-pH6.8 complex in phosphate buffer solution does not stain the hydrophilic area.

### Example 6: Differentiation between different conformations in Calmodulin (CaM) protein using POWT and surface modified patterned glass substrates (Route A).

CaM is natural protein that adopts different conformations with or without Ca²⁺. Stamps and substrates are provided according to VI in the detailed description of the present invention. The surface of the individual substrates is patterned, with respect to surface free energy, by placing separate stamps onto them and incubating for 30 min. Solutions of POWT (0,5 mg/ml)/CaM (0,3 mg/ml) in Tris-HCl (20 mM, pH 7.5) buffer and POWT (0,5 mg/ml)/CaM (0,3 mg/ml) in Tris-HCl (20 mM, pH 7.5) buffer containing 10 mM Ca²⁺ was prepared and incubated for 30 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 470/40nm bandpass filter for selecting excitation wavelengths and a 515 nm long pass filter for detection (exposure time: 1000 ms). Fluorescence spectra from a POWT/Calmodulin (CaM)-complex with or without 10 mM Ca²⁺ added. were recorded using a Jobin-Yvon spex FluoroMax-2 apparatus, excitation was set to 400 nm and the emission spectra were recorded from 450 to 700 nm. The result of this procedure is shown in figure 11. POWT/CaM complex in phosphate buffer solution stains the hydrophobic area in orange color. POWT/CaM complex with Ca²⁺ added in phosphate buffer solution stains the hydrophobic area in green color.

### Example 7: Patterning of insulin/conjugated polyelectrolyte (PTAA or POMT) complexes on surface modified patterned glass substrates (Route A).

Stamps and substrates are provided according to VI in the detailed description of the present invention. The surface of the individual substrates is patterned, with respect to surface free energy, by placing separate stamps onto them and incubating for 30 min. Solutions of PTAA (10 µM)/Insulin (11 µM) complex in phosphate (20 mM, pH 7.0) buffer and POMT (10 µM)/Insulin (11 µM) complex in phosphate (20 mM, pH 7.0) buffer was prepared and incubated for 30 minutes. 30 µl of the solutions was placed on individual patterned surfaces. After 20 minutes of incubation at ambient conditions the individual droplets were removed by blowing with nitrogen gas until the substrates is completely dry. The fluorescence was recorded with an epifluorescence microscope (Zeiss Axiovert inverted microscope A200 Mot) equipped with a CCD camera (Axiocam HR). A 405/30nm bandpass filter for selecting excitation wavelengths and a 450 nm long pass filter for detection (exposure time: 4000 ms for PTAA and 500 ms for POMT). The result of this procedure is shown in figure 12. PTAA/Insulin complex in phosphate buffer solution does not stain the hydrophilic area. PTAA/Insulin complex in phosphate buffer solution stains the hydrophobic area. POMT/Insulin complex in phosphate buffer solution stains the hydrophilic area. POMT/Insulin complex in phosphate buffer solution does not stain the hydrophobic area.

## Claims

1. A patterning method of making a device usable for the detection of biomolecular interactions, comprising
providing a substrate of a suitable material;
performing a stamping procedure using soft lithography to provide a pattern of hydrophilic and hydrophobic areas on said substrate;
applying an aqueous solution of at least one reporter molecule to at least selected ones of said areas, said reporter molecule being capable of responding with some detectable change in property as a result of interaction with a biomolecule;
incubating the substrate with applied solution for a predetermined time;
removing excess solution from the substrate, wherein said reporter molecule is selected from the group consisting of conjugated polyelectrolytes, copolymers or homopolymers of thiophene, pyrrole, aniline, furan, phenylene, vinylene or derivatives thereof.

2. The method as claimed in claim 1, wherein said conjugated polyelectrolyte is fluorescent.

3. The method as claimed in any of claims 1-2, wherein said reporter molecule is capable of interaction with a biomolecule, and wherein said interaction will cause a detectable change in property.

4. The method as claimed in any of claims 1-3, wherein said substrate comprises silicon wafers, glass, glass slides, glass beads, glass wafers, silicon rubber, polystyrene, polyethylene, fluorinated hydrocarbon polymers, silica gel beads, gold, indium tin oxide-coated materials, filter paper made from nylon, cellulose or nitrocellulose, standard copy paper or variants thereof and separation media or other chromatographic media

5. The method as claimed in any of claims 1-4, wherein said stamping procedure further comprising attaching to selected ones of said areas any of one or more receptor molecules and one or more target analytes alone or in combination, and forming a complex with said reporter molecule.

6. The method as claimed in claim 5, wherein said receptor molecules are selected from the group consisting of peptides, carbohydrates, nucleic acids, lipids, pharmaceuticals, antigens, antibodies, proteins, organic polymers or combination of these molecules capable of interacting with said target analyte.

7. The method as claimed in any of claims 5 or 6, wherein said target analytes are selected from the group consisting of cells, viruses, bacteria, spores, microorganisms, peptides, carbohydrates, nucleic acids, lipids, pharmaceuticals, antigens, antibodies, proteins, enzymes, toxins, organic polymers or combinations of these molecules that are capable of interacting with said receptors or reporter/receptor complexes.

8. The method as claimed in any of claims 1-7, wherein the stamping procedure comprises the following steps:
bringing a stamp into conformal contact with the substrate for a period of time, the stamp being capable of modifying the surface of the substrate to exhibit said hydrophilic and hydrophobic areas;
placing a solution containing one or more of a reporter molecule, a target analyte, a receptor molecule or a complex between two or more of these on the pattern.

9. The method as claimed in any of claims 1-7, wherein the stamping procedure comprises the following steps:
preparation of a film containing the reporter molecule, target analyte or complex between the reporter and target analyte from solution on said substrate;
placing a stamp on the film on the substrate for a period of time, the stamp being capable of modifying the surface of the substrate to exhibit said hydrophilic and hydrophobic areas;
bringing a solution containing one or more of a reporter molecule, a target analyte, a receptor molecule or a complex between these into conformal contact with the pattern;
incubating a period of time;
removing excess solution from the surface.

10. The method as claimed in any of claims 8 or 9, wherein the step of removing the excess solution is carried out by blowing an inert gas, such as nitrogen on the surface.

11. The method as claimed in any of the preceding claims, wherein the stamping procedure comprises applying a layer of plastomer molecules, suitably polyolefin plastomer (POP) molecules, preferably PDMS molecules on the substrate.

12. A biosensor device, comprising a patterned substrate having hydrophilic and hydrophobic areas, and at least one reporter molecule being capable of responding with some detectable change in property as a result of interaction with a biomolecule, said reporter molecule being bound to selected ones of said hydrophilic and hydrophobic areas on said patterned substrate, wherein said reporter molecule is selected from the group consisting of a conjugated polyelectrolyte, copolymers or homopolymers of thiophene, pyrrole, aniline, furan, phenylene, vinylene or derivatives thereof.

13. The biosensor device as claimed in claim 12, wherein said conjugated polyelectrolytes is fluorescent.

14. The biosensor device as claimed in any of claims 12-13, wherein said reporter molecule is capable of interaction with a biomolecule, and wherein said interaction will cause a detectable change in property.

15. The biosensor device as claimed in any of claims 12-14, wherein said substrate comprises silicon wafers, glass, glass slides, glass beads, glass wafers, silicon rubber, polystyrene, polyethylene, fluorinated hydrocarbon polymers, silica gel beads, gold, indium tin oxide-coated materials, filter paper made from nylon, cellulose or nitrocellulose, standard copy paper or variants thereof or separation media or other chromatographic media

16. The biosensor device as claimed in any of claims 12-15, wherein selected ones of said areas further comprise any of one or more receptor molecules and one or more target analytes alone or in combination, and forming a complex with said reporter molecule.

17. The biosensor device as claimed in any of claims 12-16, wherein said receptor molecules are selected from the group consisting of peptides, carbohydrates, nucleic acids, lipids, pharmaceuticals, antigens, antibodies, proteins, organic polymers or combination of these molecules capable of interacting with said target analyte.

18. The biosensor device as claimed in any of claims 12-17, wherein said target analytes are selected from the group consisting of cells, viruses, bacteria, spores, microorganisms, peptides, carbohydrates, nucleic acids, lipids, pharmaceuticals, antigens, antibodies, proteins, enzymes, toxins, organic polymers or combinations of these molecules that are capable of interacting with said receptors or reporter/receptor complexes.

19. A biosensor apparatus, comprising a biosensor device as claimed in claim 13, said biosensor device being located in a receptacle, suitably a flow cell, the apparatus further comprising means for detecting said detectable property.

20. A method of determining selected properties of analytes, comprising:
detecting a change of a property of a reporter molecule, provided on a device as claimed in any of claims 12-18 in response to an interaction between the reporter and an analyte; and using the detected change to determine said selected property of said analyte.

21. The method as claimed in claim 20, wherein the change of said property is detected by measuring fluorescence, Förster resonance energy transfer (FRET), quenching of emitted light, absorption, impedance, refraction index, mass, visco-elastic properties, thickness or other physical properties.

## Patentansprüche

1. Ein Muster-Auftragungsverfahren zum Herstellen einer Vorrichtung, die verwendbar ist für den Nachweis von biomolekularen Wechselwirkungen, wobei das Verfahren folgendes umfasst:
Bereitstellen eines Substrates eines geeigneten Materials;
Durchführen einer Stempelprozedur unter Verwendung von weicher Lithografie, um ein Muster aus hydrophilen und hydrophoben Bereichen auf besagtem Substrat bereitzustellen;
Anwenden einer wässrigen Lösung von zumindest einem Reportermolekül, auf zumindest ausgewählte Abschnitte von besagten Bereichen, wobei besagtes Reportermolekül in der Lage ist, mit einer gewissen nachweisbaren Eigenschafts-Veränderung als ein Ergebnis der Wechselwirkung mit einem Biomolekül zu antworten;
Inkubieren des Substrates mit einer angewandten Lösung für einen vorbestimmten Zeitraum; Entfernen der überschüssigen Lösung aus dem Substrat,
wobei besagtes Reportermolekül ausgewählt ist aus der Gruppe bestehend aus konjugierten Polyelektrolyten Copolymeren oder Homopolymeren von Thiophen, Pyrrol, Anilin, Furan, Phenylen, Vinylen oder Derivaten davon.

2. Das Verfahren, wie in Anspruch 1 beansprucht, wobei besagter konjugierter Polyelektrolyt fluoreszierend ist.

3. Das Verfahren, wie in irgendeinem der Ansprüche 1 bis 2 beansprucht, wobei besagtes Rezeptormolekül in der Lage ist, mit einem Biomolekül wechselzuwirken und wobei besagte Wechselwirkung eine nachweisbare Eigenschafts-Veränderung auslösen wird.

4. Das Verfahren gemäß irgendeinem der Ansprüche 1 bis 3, wobei besagtes Substrat Silicium-Wafer umfasst, Glas, Glasdeckgläschen, Glaskügelchen, Glaswafer, Silicium-Gummi, Polystyren, Polyethylen, fluorierte Kohlenwasserstoffpolymere, Silicagel-Kügelchen, Gold, Indium-Zinn-Oxid-überzogende Materialien, Filterpapier bestehend aus Nylon, Zellulose oder Nitrozellulose, herkömmliches Kopierpapier oder Varianten davon sowie Trennungs-Medien oder andere chromatografische Medien.

5. Das Verfahren, wie in irgendeinem der Ansprüche 1 bis 4 beansprucht, wobei besagte Stempel-Prozedur des weiteren das Anbinden von irgendeinem von ein oder mehreren Rezeptormolekülen und ein oder mehr Target-Analyten, allein oder in Kombination, an besagte Abschnitte von besagten Bereichen umfasst sowie das Ausbilden eines Komplexes mit besagtem Rezeptormolekül.

6. Das Verfahren, wie in Anspruch 5 beansprucht, wobei besagte Rezeptormoleküle ausgewählt sind aus der Gruppe bestehend aus Peptiden, Kohlenhydraten, Nukleinsäuren, Lipiden, Pharmazeutika, Antigenen, Antikörpern, Proteinen, alkalischen Polymeren oder Kombinationen von diesen Molekülen, die in der Lage sind, mit besagtem Target-Analyt zu wechselwirken.

7. Das Verfahren, wie in irgendeinem der Ansprüche 5 oder 6 beansprucht, wobei besagte Target-Analyte ausgewählt sind aus der Gruppe bestehend aus Zellen, Viren, Bakterien, Sporen, Mikroorganismen, Peptiden, Kohlenhydraten, Nukleinsäuren, Lipiden, Pharmazeutika, Antigene, Antikörper, Proteinen, Enzymen, Toxinen, organischen Polymeren oder Kombinationen von diesen Molekülen, die in der Lage sind, mit besagten Rezeptoren oder Rezeptor/Rezeptor-Komplexen zu wechselwirken.

8. Das Verfahren, wie in irgendeinem der Ansprüche 1 bis 7 beansprucht, wobei die Stempel-Prozedur die folgenden Schritte umfasst:
Bringen eines Stempels in konformalem Kontakt mit einem Substrat für einen hinreichenden Zeitraum, wobei der Stempel in der Lage ist, die Oberfläche des Substrats zu modifizieren, um besagte hydrophile und hydrophobe Bereiche zu zeigen;
Platzieren einer Lösung, welche ein oder mehrere Reportermoleküle enthält, einen Target-Analyten, ein Rezeptormolekül oder einen Komplex zwischen zwei oder mehr von diesen auf dem Muster.

9. Das Verfahren, wie in irgendeinem der Ansprüche 1 bis 7 beansprucht, wobei die Stempel-Prozedur die folgenden Schritte umfasst:
Herstellen eines Films, der ein Reportermolekül, einen Target-Analyten oder einen Komplex zwischen dem Reporter und dem Target-Analyten enthält, aus einer Lösung auf besagtem Substrat;
Platzieren eines Stempels auf dem Film auf dem Substrat für einen Zeitraum, wobei der Stempel in der Lage ist, die Oberfläche des Substrates zu modifizieren, um besagte hydrophile und hydrophobe Bereiche zu zeigen;
Bringen einer Lösung, die ein oder mehrere eines Reportermoleküls, eines Target-Analyten, eines Rezeptormoleküls, oder eines Komplexes zwischen diesen enthält, in konformalem Kontakt mit dem Muster;
Inkubieren über einen Zeitraum;
Entfernen der überschüssigen Lösung von dem Substrat.

10. Das Verfahren, wie in irgendeinem der Ansprüche 8 oder 9 beansprucht, wobei der Schritt des Entfernens der überschüssigen Lösung durchgeführt wird durch Einblasen eines inerten Gases, z.B. Stickstoff, auf der Oberfläche.

11. Das Verfahren, wie in irgendeinem der vorangegangen Ansprüche beansprucht, wobei die Stempel-Prozedur das Anwenden einer Schicht von Plastomer-Molekülen auf dem Substrat umfasst, geeigneterweise von Polyolefin-Plastomer (POP)-Molekülen, vorzugsweise von PDMS-Molekülen.

12. Eine Biosensor-Vorrichtung, umfassend ein mit Muster versehenes Substrat, mit hydrophilen und hydrophoben Bereichen sowie zumindest ein Reportermolekül, das in der Lage ist, mit gewisser nachweisbarer Eigenschafts-Veränderung als ein Ergebnis der Wechselwirkung mit einem Biomolekül zu antworten, wobei besagtes Reportermolekül an ausgewählte Bereiche von besagten hydrophilen und hydrophoben Gebieten auf besagtem mit Mustern versehenen Substrat gebunden ist, wobei das Reportermolekül ausgewählt ist aus der Gruppe bestehend aus einem konjugierten Polyelektrolyten, Copolymeren oder Homopolymeren von Thiophen, Pyrrol, Anilin, Furan, Phenylen, Vinylen oder Derivaten davon.

13. Die Biosensor-Vorrichtung, wie in Anspruch 12 beansprucht, wobei besagter konjugierter Polyelektrolyt fluoreszierend ist.

14. Die Biosensor-Vorrichtung, wie in irgendeinem der Ansprüche 12-13 beansprucht, wobei besagtes Reporter-Molekül in der Lage ist, mit einem Biomolekül wechselzuwirken und wobei besagte Wechselwirkung eine nachweisbare Eigenschafts-Veränderung auslösen wird.

15. Die Biosensor-Vorrichtung, wie in irgendeinem der Ansprüche 12 bis 14 beansprucht, wobei besagtes Substrat Silicium-Wafer, Glas, Glasdeckel, Glaskügelchen, GlasWafer, Siliciumgummi, Polystyren, Polyethlyen, fluorinierte KohlenwasserstoffPolymere, Silicagel-Kügelchen, Gold, Indium, Zinn-Oxid-überzogene Materialien, Filterpapier, bestehend aus Nylon, Zellulose oder Nitro-Cellulose, herkömmliches Kopierpapier, oder Varianten davon, oder Trenn-Medien oder andere chromatografische Medien umfasst.

16. Die Biosensor-Vorrichtung, wie in irgendeinem der Ansprüche 12 bis 15 beansprucht, wobei ausgewählte Abschnitte aus besagten Bereichen des weiteren ein oder mehrere Rezeptormoleküle und ein oder mehr Target-Analyten, allein oder in Kombination, enthalten, die gleichzeitig einen Komplex mit besagtem Reportermolekül ausbilden.

17. Die Biosensor-Vorrichtung, wie in irgendeinem der Ansprüche 12-16 beansprucht, wobei besagte Rezeptor-Moleküle ausgewählt sind aus der Gruppe bestehend aus Peptiden, Kohlenhydraten, Nukleinsäuren, Lipiden, Pharmazeutika, Antigenen, Antikörper, Proteinen, organischen Polymeren oder Kombinationen von diesen Molekülen, die in der Lage sind, mit besagtem Target-Analyt wechselzuwirken.

18. Die Biosensor-Vorrichtung, wie in irgendeinem der Ansprüche 12-17 beansprucht, wobei besagte Target-Analyten ausgewählt sind aus der Gruppe bestehend aus Zellen, Viren, Bakterien, Sporen, Mikroorganismen, Peptiden, Kohlehydraten, Nukleinsäuren, Lipiden, Pharmazeutika, Antigene, Antikörper, Proteinen, Enzymen, Toxinen, organischen Polymeren oder Kombinationen von diesen Molekülen, die in der Lage sind, mit besagten Rezeptoren oder Rezeptor/Rezeptor-Komplexen wechselzuwirken.

19. Ein Biosensor-Apparat, umfassend eine Biosensor-Vorrichtung, wie in Anspruch 13 beansprucht, wobei besagte Biosensor-Vorrichtung in einem Gehäuse lokalisiert ist, geeigneter Weise in einer Flusszelle, wobei der Apparat des weiteren Mittel umfasst zum Nachweis von besagter nachweisbarer Eigenschaft.

20. Ein Verfahren zum Bestimmen von ausgewählten Eigenschaften von Analyten, wobei das Verfahren folgendes umfasst:
Nachweis einer Eigenschafts-Veränderung eines Reporter-Moleküls, bereitgestellt auf einer Vorrichtung, wie in irgendeinem der Ansprüche 12-18 beansprucht, als Antwort auf eine Wechselwirkung zwischen den Reporter und einem Analyten; und unter Verwendung der nachgewiesenen Veränderung, um besagte ausgewählte Eigenschaften von besagtem Analyten zu bestimmen.

21. Das Verfahren, wie in Anspruch 20 beansprucht, wobei die besagte Eigenschafts-Veränderung nachgewiesen wird durch Messen der Fluoreszenz, von Förster Resonanz Energie Transfer (FRET), durch Quenchen von Emissionslicht, Absorption, Impedanz, des refraktorischen Index, der Masse, von visco-elastischen Eigenschaften, der Dicke oder anderen physikalischen Eigenschaften.

## Revendications

1. Procédé de structuration pour fabriquer un dispositif utilisable pour la détection d'interactions biomoléculaires, comprenant
la fourniture d'un substrat en un matériau approprié ;
la réalisation d'un traitement d'estampage en utilisant une lithographie douce pour fournir une structure de zones hydrophiles et hydrophobes sur ledit substrat ;
l'application d'une solution aqueuse d'au moins une molécule rapporteuse sur au moins des zones choisies desdites zones, ladite molécule rapporteuse étant apte à répondre avec un certain changement détectable de propriété en conséquence de l'interaction avec une biomolécule ;
l'incubation du substrat avec la solution appliquée pendant un temps prédéterminé ;
l'enlèvement de l'excès de solution à partir du substrat,
dans lequel ladite molécule rapporteuse est choisie dans le groupe constitué par les polyélectrolytes conjugués, les copolymères ou homopolymères de thiophène, de pyrrole, d'aniline, de furane, de phénylène, de vinylène ou les dérivés de ceux-ci.

2. Procédé selon la revendication 1, dans lequel ledit polyélectrolyte conjugué est fluorescent.

3. Procédé selon l'une quelconque des revendications 1-2, dans lequel ladite molécule rapporteuse est capable d'interagir avec une biomolécule, et dans lequel ladite interaction va provoquer un changement détectable de propriété.

4. Procédé selon l'une quelconque des revendications 1 à 3, dans lequel ledit substrat comprend les tranches de silicium, le verre, les lamelles de verre, les billes de verre, les tranches de verre, le caoutchouc de silicium, un polystyrène, un polyéthylène, les polymères hydrocarbonés fluorés, les billes de gel de silice, l'or, les matériaux revêtus d'oxyde d'étain et d'indium, un papier filtre fait à partir de nylon, de cellulose ou de nitrocellulose, un papier copie normal ou des variantes de celui-ci, et les milieux de séparation ou d'autres milieux chromatographiques.

5. Procédé selon l'une quelconque des revendications 1 à 4, dans lequel ledit traitement d'estampage comprend en outre l'attachement à des zones choisies parmi lesdites zones, de tous ingrédients parmi une ou plusieurs molécules réceptrices et un ou plusieurs analytes cibles seuls ou combinés, et la formation d'un complexe avec ladite molécule rapporteuse.

6. Procédé selon la revendication 5, dans lequel lesdites molécules réceptrices sont choisies dans le groupe constitué par les peptides, les glucides, les acides nucléiques, les lipides, les produits pharmaceutiques, les antigènes, les anticorps, les protéines, les polymères organiques ou une combinaison de ces molécules capable d'interagir avec ledit analyte cible.

7. Procédé selon l'une quelconque des revendications 5 ou 6, dans lequel lesdits analytes cibles sont choisis dans le groupe constitué par les cellules, les virus, les bactéries, les spores, les micro-organismes, les peptides, les glucides, les acides nucléiques, les lipides, les produits pharmaceutiques, les antigènes, les anticorps, les protéines, les enzymes, les toxines, les polymères organiques ou des combinaisons de ces molécules qui sont capables d'interagir avec lesdits récepteurs ou complexes rapporteur/récepteur.

8. Procédé selon l'une quelconque des revendications 1 à 7, dans lequel le traitement d'estampage comprend les étapes suivantes :
mise en contact conforme d'un tampon avec le substrat pendant une période de temps, le tampon étant capable de modifier la surface du substrat pour qu'il présente lesdites zones hydrophiles et hydrophobes ;
placement d'une solution contenant un ou plusieurs ingrédients parmi une molécule rapporteuse, un analyte cible, une molécule réceptrice ou un complexe entre deux de ceux-ci ou plus sur la structure.

9. Procédé selon l'une quelconque des revendications 1 à 7, dans lequel le traitement d'estampage comprend les étapes suivantes :
préparation d'un film contenant la molécule rapporteuse, l'analyte cible ou un complexe entre la molécule rapporteuse et l'analyte cible de la solution sur ledit substrat ;
placement d'un tampon sur le film sur le substrat pendant une période de temps, le tampon étant capable de modifier la surface du substrat pour qu'il présente lesdites zones hydrophiles et hydrophobes ;
mise d'une solution contenant un ou plusieurs ingrédients parmi une molécule rapporteuse, un analyte cible, une molécule réceptrice ou un complexe entre ceux-ci en contact conforme avec la structure ;
incubation pendant une période de temps ;
enlèvement de l'excès de solution à partir de la surface.

10. Procédé selon l'une quelconque des revendications 8 ou 9, dans lequel l'étape d'enlèvement de l'excès de solution est effectuée en soufflant un gaz inerte, tel que l'azote, sur la surface.

11. Procédé selon l'une quelconque des revendications précédentes, dans lequel le traitement de structuration comprend l'application d'une couche de molécules plastomères, de préférence des molécules plastomères de polyoléfines (POP), de préférence des molécules PDMS, sur le substrat.

12. Dispositif biocapteur, comprenant un substrat structuré ayant des zones hydrophiles et hydrophobes, et au moins une molécule rapporteuse qui est capable de réagir avec un certain changement détectable de propriété en conséquence d'une interaction avec une biomolécule, ladite molécule rapporteuse étant liée à des zones choisies parmi lesdites zones hydrophiles et hydrophobes sur ledit substrat structuré, dans lequel ladite molécule rapporteuse est choisie dans le groupe constitué par un polyélectrolyte conjugué, les copolymères ou homopolymères de thiophène, de pyrrole, d'aniline, de furane, de phénylène, de vinylène ou les dérivés de ceux-ci.

13. Dispositif biocapteur selon la revendication 12, dans lequel ledit polyélectrolyte conjugué est fluorescent.

14. Dispositif biocapteur selon l'une quelconque des revendications 12 ou 13, dans lequel ladite molécule rapporteuse est capable d'interagir avec une biomolécule, et dans lequel ladite interaction va provoquer un changement détectable de propriété.

15. Dispositif biocapteur selon l'une quelconque des revendications 12 à 14, dans lequel ledit substrat comprend les tranches de silicium, le verre, les lamelles de verre, les billes de verre, les tranches de verre, le caoutchouc de silicium, un polystyrène, un polyéthylène, les polymères hydrocarbonés fluorés, les billes de gel de silice, l'or, les matériaux revêtus d'oxyde d'étain et d'indium, un papier filtre fait à partir de nylon, de cellulose ou de nitrocellulose, un papier copie normal ou des variantes de celui-ci, et les milieux de séparation ou d'autres milieux chromatographiques.

16. Dispositif biocapteur selon l'une quelconque des revendications 12 à 15, dans lequel les zones choisies parmi lesdites zones comprennent en outre tous ingrédients parmi une ou plusieurs molécules réceptrices et un ou plusieurs analytes cibles seuls ou combinés, et un complexe est formé avec ladite molécule rapporteuse.

17. Dispositif biocapteur selon l'une quelconque des revendications 12 à 16, dans lequel lesdites molécules réceptrices sont choisies dans le groupe constitué par les peptides, les glucides, les acides nucléiques, les lipides, les produits pharmaceutiques, les antigènes, les anticorps, les protéines, les polymères organiques ou une combinaison de ces molécules capable d'interagir avec ledit analyte cible.

18. Dispositif biocapteur selon l'une quelconque des revendications 12 à 17, dans lequel lesdits analytes cibles sont choisis dans le groupe constitué par les cellules, les virus, les bactéries, les spores, les micro-organismes, les peptides, les glucides, les acides nucléiques, les lipides, les produits pharmaceutiques, les antigènes, les anticorps, les protéines, les enzymes, les toxines, les polymères organiques ou des combinaisons de ces molécules qui sont capables d'interagir avec lesdits récepteurs ou complexes rapporteur/récepteur.

19. Appareil biocapteur, comprenant un dispositif biocapteur selon la revendication 13, ledit dispositif biocapteur se trouvant dans un réceptacle, de préférence une cuve à circulation, l'appareil comprenant en outre des moyens pour détecter ladite propriété détectable.

20. Procédé de détermination de propriétés choisies d'analytes, comprenant : la détection d'un changement d'une propriété d'une molécule rapporteuse, fournie sur un dispositif selon l'une quelconque des revendications 12 à 18, en réponse à une interaction entre la molécule rapporteuse et un analyte ; et l'utilisation du changement détecté pour déterminer ladite propriété choisie dudit analyte.

21. Procédé selon la revendication 20, dans lequel le changement de ladite propriété est détecté en mesurant la fluorescence, par transfert d'énergie par résonance Förster (FRET), l'extinction d'une lumière émise, l'absorption, l'impédance, l'indice de réfraction, la masse, les propriétés viscoélastiques, l'épaisseur ou d'autres propriétés physiques.
